# FASCICULE DE BREVET EUROPEEN

(11) **EP 2 906 052 B1**
(45) Date de publication et mention de la délivrance du brevet: **05.10.2016**
(21) Numéro de dépôt: 13762871.5
(22) Date de dépôt: 18.09.2013
(51) Int. Cl.: A23L 33/165, A23K 20/20, A61K 33/26, C05D 9/02

(54) **COMPOSITION NUTRITIVE INORGANIQUE DE FER**
EISEN-ENTHALTENDE INORGANISCHE NAHRUNGSZUBEREITUNG
NUTRITIOUS INORGANIC IRON COMPOSITION

(30) Priorité: 10.10.2012 BE 201200666
(43) Date de publication de la demande: 19.08.2015
(73) Titulaire: Prayon, 4480 Engis (BE)
(72) Inventeur: CAPPELLE, Philippe, Jacques, Myriam, B-4130 Esneux (BE); VERHELST, Kurt, Thierry, S., B-2360 Oud-Turnhout (BE)
(74) Mandataire: Gevers Patents
(86) Numéro de dépôt international: PCT/EP2013/069397
(87) Numéro de publication internationale: WO 2014/056690

(56) Documents cités:
- US-A- 3 784 367
- US-A- 3 856 500
- US-A- 4 336 052
- US-A- 4 721 519
- US-A1- 2009 124 572
- US-A1- 2010 240 533

## Description

La présente invention se rapporte à une composition nutritive inorganique en phase aqueuse enrichie en micronutriments.

Que ce soit pour la nutrition humaine, animale, celle des végétaux ou encore celle des microorganismes, l'assimilation de minéraux (macro- et micronutriments) est indispensable aux cycles vitaux de ces différents organismes. Cependant, pour pouvoir être absorbés et assimilés, ces éléments nutritifs doivent indispensablement être biodisponibles, c'est-à-dire pouvoir être totalement solubilisés dans une solution au départ de laquelle ces organismes peuvent les puiser et les assimiler.

Toutefois, le fer est un micronutriment bien connu pour être un élément particulièrement peu solubilisable. Une des voies utilisées pour solubiliser le fer réside dans le fait de le complexer à un chélate organique. Toutefois, le chélate organique est de plus en plus controversé comme additif alimentaire, comme tous les additifs organiques et ne convient donc plus pour la solubilisation de fer dans les additifs alimentaires ou dans toute culture de microorganismes destinés à être ingérés comme certains ferments ou les microalgues ou encore dans les végétaux comestibles.

Plus récemment, quelques auteurs se sont penchés sur la possibilité de complexer le fer à des polyphosphates comme le pyrophosphate, le tripolyphosphate ou encore des polymères de phosphate supérieurs et c'est dans ce contexte que la présente invention s'inscrit.

D'ailleurs, on connait du document US 20090124572 des compositions solides. Le document divulgue un complément alimentaire solide contenant du pyrophosphate de fer chélaté. Selon l'enseignement du document, ledit solide peut être solubilisé et chélaté à l'aide de citrate qui est une source organique.

La présente invention se rapporte plus particulièrement à une composition nutritive inorganique comprenant au moins une phase aqueuse, un polyphosphate et au moins une source de fer en tant que micronutriment, ladite composition nutritive présentant un rapport molaire P_{poly}/Fe compris entre 5 et 50 où P_{poly} représente un nombre de moles total de phosphore sous forme de polyphosphate et où Fe représente un nombre de moles total de fer.

Comme on l'a mentionné précédemment, de telles compositions nutritives en phase aqueuse trouvent des applications dans de nombreux domaines aussi variés que l'alimentation humaine et animale, la culture de microorganismes ou encore l'horticulture et ses dérivés comme l'hydroponie et la fertirrigation. Toutefois, dans de nombreuses applications, le fer est un élément apparaissant comme élément perturbateur de la stabilité de la composition lorsqu'elle est en phase aqueuse, difficilement soluble dans cette phase aqueuse et aboutissant à un micronutriment souvent peu biodisponible car selon le milieu dans lequel il se trouve, il génère bien souvent l'apparition de précipités.

C'est par exemple le cas des suppléments alimentaires sous forme de suspension ou de comprimés effervescents assez désagréables à avaler.

De même, dans des applications d'additifs alimentaires, comme des liquides supplémentés (lait, boissons, yaourt) ou tout autre aliment supplémenté, le milieu dans lequel le fer est ajouté n'est pas forcément à un pH qui favorise la dissolution du fer, ce qui peut poser de nombreux problèmes, surtout dans l'acceptation du produit alimentaire par le consommateur, qui n'a pas envie d'ingurgiter un aliment trouble ou contenant des précipités.

Dans le cas des organismes végétaux, si le carbone représente l'élément nutritif essentiel à la photosynthèse, les éléments minéraux (les macro- et les micronutriments) sont tout aussi importants pour que les végétaux se développent de façon optimale. Ces éléments minéraux sont typiquement acquis par les plantes au départ du sol ou du substrat de culture, par l'intermédiaire des poils absorbants racinaires permettant à l'eau et aux minéraux d'être absorbés.

Parmi ces micronutriments, le fer est celui dont la plante requiert la concentration la plus élevée (de l'ordre de 100 mg/kg de tissu sec), ce minéral étant nécessaire à la synthèse de la chlorophylle qui est elle-même indispensable à la photosynthèse, laquelle est directement liée à la croissance des plantes.

Le fer, contrairement au processus de la digestion humaine, est très peu soluble en phase aqueuse et est, par conséquent, très peu biodisponible pour les végétaux ne bénéficiant pas d'un pH acide gastrique facilitant la biodisponibilité du fer. Le fer forme alors un précipité qui perturbe la stabilisation de la solution.

De nos jours, de nombreuses cultures (tomates, concombres, courgettes, laitues, poivrons, ...) sont réalisées en cultures hydroponiques ou par des systèmes de goutte-à-goutte, ces deux techniques permettant de réaliser une fertirrigation, c'est-à-dire de réaliser une alimentation à la fois hydrique et minérale des végétaux par apport d'une composition aqueuse nutritive jusqu'aux racines des plantes.

Cependant, ces techniques culturales étant basées sur l'absence de substrat ou sur l'utilisation de substrats inertes (sable, billes d'argile, laine de roche, ...), d'une part elles ne sont pas aidées par la flore microbienne du sol qui régule le pH de la terre pour les cultures plus conventionnelles et d'autre part ne bénéficient pas de l'apport de substances natives également présentes dans le sol qui pourraient complexer le fer et le rendre biodisponible.

Dans le cas particulier de l'hydroponie, les substrats neutres et inertes susdits sont régulièrement irrigués par un courant liquide aqueux apportant des sels minéraux et des nutriments essentiels à la plante par l'intermédiaire d'un réseau de tuyaux véhiculant la composition aqueuse nutritive.

Le système goutte-à-goutte nécessite également un substrat et des tuyaux de distribution d'une composition aqueuse nutritive distribuée aux plantes par irrigation discontinue à la surface supérieure d'un substrat.

Si ces modes de fertilisation sont largement utilisés et permettent d'augmenter considérablement les rendements de nombreuses cultures, une contrainte majeure est que les éléments nutritifs (macro- et micronutriments) en solution aqueuse et acheminés jusqu'aux racines des végétaux, doivent être biodisponibles, c'est-à-dire qu'ils doivent être directement assimilables par les plantes et donc aptes à passer de la solution liquide nutritive dans le végétal par l'intermédiaire des poils absorbants racinaires et rester sous forme soluble.

C'est pourquoi, de nombreuses recherches ont été menées pour mettre au point des compositions nutritives en phase aqueuse, inorganiques, concentrées ou prêtes à l'emploi, stables, et sans impuretés dont les constituants sont totalement dissous, que ce soit le fer ou les autres éléments nutritifs, les compositions fertilisantes liquides ayant par ailleurs à présenter un pouvoir tampon suffisant.

Par exemple, des compositions nutritives en phase aqueuse inorganiques telles que mentionnées précédemment, comprenant une phase aqueuse, un polyphosphate et du fer sont divulguées dans les documents US 3784367, US 4721519, US 4336052.

Par exemple, le document US 3784367 décrit des compositions de fertilisation sous forme de phase aqueuse de polyphosphate de potassium produites au départ d'acide polyphosphorique de voie humide et de KCI, l'acide polyphosphorique contenant du fer sous forme complexée. Une fois le polyphosphate de potassium obtenu, un ajout d'ammoniaque ou de thiosulfate d'ammonium est effectué pour que la composition en phase aqueuse fertilisante contienne des ions ammonium (NH₄⁺) assurant la présence d'azote dans la formulation aqueuse selon un rapport molaire divulgué dans les exemples N/Pₜₒₜₐₗ compris entre 0,51 et 0,56.

Malheureusement, une telle composition fertilisante en phase aqueuse contenant autant d'azote, sous forme d'ions NH₄⁺ selon un rapport molaire N/Pₜₒₜₐₗ compris entre 0,51 et 0,56 ne permet pas d'obtenir une composition polyvalente nutritive complètement liquide, mais seulement en phase aqueuse.

En effet, selon ce document, la présence d'ammonium en une telle quantité, bien qu'elle ne soit pas explicitée, semble dictée par les contraintes du procédé et engendre donc une présence d'ammonium au pro-rata de la teneur en polyphosphate, ce qui rend impossible une utilisation polyvalente de la composition nutritive ainsi obtenue. En effet, si dans certains domaines d'application la présence d'ammonium est moins problématique, comme dans le cas général de l'agriculture classique; dans d'autres applications, elle n'est pas requise et/ou pas forcément requise à la teneur dictée par le procédé décrit ci-dessus.

En effet, si dans le sol, il existe une population de bactéries nitrifiantes qui convertissent les ions ammonium en ions nitrate, ce n'est pas le cas des substrats inertes ou neutres de la culture hors sol provoquant dès lors une accumulation d'ions ammonium qui sont nocifs pour les végétaux. A titre d'exemple, les plants de tomate, les radis et les épinards supportent mal la présence d'ions ammonium qui peuvent même mener au dépérissement de ces végétaux.

Par ailleurs, en culture hors sol, en comparaison d'une culture en pleine terre où le sol présente un pouvoir tampon par nature et grâce à la population de microorganismes saprophytes et symbiotiques, les substrats neutres ou inertes ne présentent pas de pouvoir tampon suffisant pour pallier la baisse de pH que l'assimilation des ions NH₄⁺ induit au niveau des racines. La présence d'ions NH₄⁺ perturbe donc la maîtrise du pH dans ce type de culture. De plus, jusqu'à ce jour, la solution pour pallier cet inconvénient qui résiderait dans l'augmentation du pH de la solution nutritive en phase aqueuse ne peut être mise en oeuvre pour plusieurs raisons majeures.

Tout d'abord, une des voies compatibles et aisées pour augmenter le pH serait de doser une quantité supplémentaire d'ammoniac, ce qui ne ferait qu'empirer le problème.

Ensuite, la présence d'ions ammonium est incompatible avec des pH plus élevés des solutions nutritives en ce qu'au dessus de 6,2 un dégagement gazeux d'ammoniac se produit. Ce dernier se traduit de nouveau par une baisse du pH de la solution nutritive qui tend à se stabiliser aux environs de 6.

Enfin, le dégagement d'ammoniac gazeux atteint des niveaux dangereux en termes d'explosivité et de nocivité au-delà de pH 8,5.

Par ailleurs, le procédé mis en oeuvre dans le document US 3784367, et reposant sur l'obtention de polyphosphate de potassium au départ d'acide polyphosphorique de voie humide, donne lieu à des solutions comprenant de nombreuses impuretés.

Ces impuretés empêchent l'utilisation de telles solutions en culture hydroponique et dans les systèmes goutte-à-goutte, sans toutefois y être limité, puisque ces impuretés sont soit sous forme solide, soit précipitent au cours du temps, provoquant ainsi une accumulation d'impuretés au fur et à mesure dans les tuyaux véhiculant la composition aqueuse nutritive ainsi qu'au niveau des têtes de dispersion, ce qui entraine un bouchage du système de fertilisation. Le système d'acheminement de la composition aqueuse nutritive est dès lors inopérationnel, doit être complètement démonté pour être nettoyé ou remplacé, ce qui ne permet plus d'assurer la nutrition des végétaux ni la continuité de la fertirrigation qui est pourtant un but premier de cette technique.

De telles manipulations requièrent du temps, monopolisent des surfaces qui ne peuvent plus être utilisées pour la production de végétaux, ce qui, par conséquent, a des répercutions en terme de rendement cultural et de coûts de production.

Pour obtenir des formulations aqueuses sans impuretés selon le procédé décrit dans le document US 3784367, il conviendrait d'utiliser de l'acide thermique très coûteux et dont l'utilisation donnerait lieu à un produit fini onéreux et non compétitif par rapport aux formulations aqueuses nutritives existantes.

Il est également connu du document US 3856500 une composition fertilisante aqueuse qui comprend du polyphosphate de potassium finement divisé dans un liquide. La présence de ces particules en suspension empêche une utilisation polyvalente de ladite composition fertilisante, par exemple en culture hydroponique, sans compter que ces particules sont fortement susceptibles de former des germes pour la croissance de précipités ultérieurs.

Il existe donc un réel besoin de produire des réelles solutions liquides, prêtes à l'emploi et stables (sans précipités ou impuretés solides) à un coût compétitif et qui peuvent être utilisées pour plusieurs applications.

Par exemple, ces solutions liquides et stables polyvalentes pourront être directement utilisées par exemple pour la nutrition dans l'alimentation humaine et animale, dans les boissons, dans la nutrition de végétaux cultivés en pleine terre ou en hydroponie ou peuvent constituer des solutions stocks qu'il conviendra de diluer dans de l'eau avant leur utilisation.

La présente invention entend donc solutionner ces problèmes en procurant une composition nutritive polyvalente qui est stable et sous forme de solution (et qui le reste) dans laquelle les micronutriments sont et restent sous forme biodisponibles.

Par les termes « solution, liquide ou encore solution liquide », on entend, au sens de la présente invention, une solution entièrement sous forme liquide, c'est-à-dire une formulation où la présence d'impuretés ou de particules solides est inférieure à 0,2% et de manière particulièrement préférentielle inférieure à 0,05% en poids, par rapport au poids total de la formulation, même après conservation pendant une période de temps prédéterminée.

A cette fin, la présente invention procure une composition nutritive inorganique, telle que mentionnée ci-avant, comprenant au moins une phase aqueuse, au moins un polyphosphate et au moins une source de fer en tant que micronutriment, ladite composition nutritive présentant un rapport molaire P_{poly}/Fe compris entre 5 et 50 où P_{poly} représente un nombre de moles total de phosphore sous forme de polyphosphate et où Fe représente un nombre de moles total de fer, qui est caractérisée en ce que ladite composition nutritive inorganique comprenant au moins une phase aqueuse est sous forme de solution aqueuse dans laquelle le fer de ladite source de fer est complexé audit au moins un polyphosphate et en ce qu'elle présente en outre un rapport molaire N/Pₜₒₜₐₗ inférieur ou égal à 0,2, où N représente le nombre de moles d'ammonium et où Pₜₒₜₐₗ représente le nombre de moles de phosphore total.

La solution nutritive ainsi obtenue est d'une part une composition minérale, ne contenant donc pas de composé organique, ce qui rend son utilisation particulièrement polyvalente et comporte une teneur en azote limitée et flexible et non une teneur en ammonium dictée par le procédé. De plus, la composition nutritive ainsi obtenue est une solution et donc une formulation liquide, procurant de cette façon le fer sous forme biodisponible qui reste entièrement à l'état liquide après conservation pendant une période minimale de 6 mois.

En effet, selon la présente invention, il a été montré qu'une telle composition sous forme de solution nutritive inorganique comprenant au moins un polyphosphate et présentant un rapport molaire N/Pₜₒₜₐₗ inférieur ou égal à 0,2 permet une dissolution totale du fer et de tous les constituants de la formulation liquide nutritive inorganique et dès lors d'obtenir une composition sous forme de solution liquide nutritive inorganique au sens de l'invention.

De plus, la proportion de P_{poly}, à savoir de phosphate sous forme de polyphosphates, par rapport à la teneur en fer est optimale pour que les polyphosphates agissent comme agent complexant et maintiennent le fer en solution sous forme d'ions dissous.

De plus, contrairement à la composition liquide selon le document US 3784367, la composition liquide selon la présente invention permet une utilisation polyvalente dans tout type d'application comme l'alimentaire, la culture de végétaux ou de microorganismes, que ce soit en sols ou hors sols comme la culture hydroponique ou de fertirrigation au goutte-à-goutte, tout en solutionnant la très problématique présence d'ammonium.

En effet, selon la présente invention, la solution nutritive présente un rapport molaire N/Pₜₒₜₐₗ inférieur ou égal à 0,2, qui peut varier selon les besoins et peut même dans certains cas être nulle dès lors que le procédé de fabrication de la composition selon la présente invention ne comporte pas d'étape obligatoire d'ajout d'ammoniac ou d'ammonium.

Cette teneur en ammonium réduite présente plusieurs avantages dont les principaux sont mentionnés ci-après. En ce qui concerne la culture sur substrat neutre ou inerte, hors sol, la teneur réduite en azote et donc en ammonium évite l'accumulation d'ions ammonium qui sont nocifs pour bon nombre de végétaux.

De plus, la concentration en ions ammonium est suffisamment faible dans la solution nutritive pour que leur absorption par le système racinaire ne perturbe pas la maîtrise du pH de ladite solution. Il est en effet connu que l'assimilation de chaque ion NH₄⁺ s'accompagne de la libération d'un ion H₃O⁺.

Enfin, la teneur réduite en ammonium permet de procurer des solutions nutritives dont le pH ne doit plus nécessairement être inférieur à 6,5 car le problème de dégagement d'ammoniac est contourné. Un pH supérieur à 6,5 tend en fait à réduire significativement la vitesse d'hydrolyse des liaisons P-O-P constituant les polyphosphates. Cette réaction d'hydrolyse entraîne une rétrogradation progressive des polyphosphates en orthophosphates, qui n'ont pas de pouvoir complexant. En conséquence, le fait de pouvoir éléver le pH, ce qui réduit la dégradation des polyphosphates, améliore la stabilité de la composition selon l'invention et garantit la biodisponibilité du fer sur de plus longues durées.

En conclusion, la solution selon la présente invention permet donc en contournant les problèmes liés à la présence d'ions ammonium de maintenir stable la solution nutritive et donc de garder les micronutriments sous forme biodisponible.

Par ailleurs, la solution nutritive selon la présente invention, qui permet de maintenir les micronutriments sous forme solubilisée et biodisponible permet autant d'application que souhaité en ce qu'elle présente un avantage très certain dans les applications alimentaires, mais également pour tout type de culture de végétaux et/ou de microorganismes, comme la culture en hydroponie ou en fertirrigation où la présence de précipités est fatale.

Ainsi, de façon tout à fait avantageuse, la composition nutritive inorganique sous forme de solution liquide selon l'invention est stable et peut être utilisée de manière polyvalente tant pour les cultures « classiques » (cultures en pleine terre) que pour les cultures hors-sol (par exemple pour l'hydroponie ou le goutte-à-goutte), mais également dans le domaine des additifs et compléments alimentaires.

De plus, son caractère polyvalent simplifie aussi la gestion des stocks ainsi que les facilités de stockage et de transport dès lors qu'une seule solution convient pour différents domaines d'application. La solution selon l'invention, qui peut être commercialisée sous forme de concentré ou de solution prête à l'emploi, bien que l'on puisse envisager également différentes solutions dont les teneurs ou les sources de nutriments sont variées pour la spécialiser en fonction des diverses applications, confirme de cette manière la parfaite flexibilité de la solution nutritive selon la présente invention.

Avantageusement, ledit rapport molaire P_{poly}/Fe est compris entre 8 et 32, ce rapport molaire de la teneur en fer à la teneur en polyphosphate permettant de maintenir le fer entièrement en solution dans la solution nutritive final malgré la présence d'autres ions tels que Ca²⁺ et Mg²⁺ qui concurrencent le fer par leurs propres réactions de complexation avec les polyphosphates et pendant suffisamment longtemps pour assurer une stabilité de la solution nutritive.

Avantageusement, ledit rapport molaire N/Pₜₒₜₐₗ est inférieur ou égal à 0,15, de préférence inférieur ou égal à 0,10, de manière préférentielle inférieur ou égal à 0,05 et plus particulièrement proche de 0, voire nul.

Avantageusement, la solution nutritive inorganique selon la présente invention présente une teneur en fer comprise entre 0,02 et 3 % en poids de fer par rapport au poids total de ladite composition nutritive, de manière à procurer un équilibre entre teneur en polyphosphate requise pour le pouvoir tampon et pour la complexation des micronutriments et apport en fer nécessaire dans les diverses applications de la solution selon la présente invention.

Avantageusement, la solution nutritive inorganique selon l'invention comprend en outre une source additionnelle de micronutriment choisie dans le groupe constitué des sources de B, Mn, Zn, Cu, Mo, Co et leurs mélanges, ladite au moins une source additionnelle de micronutriment étant présente dans un ratio atomique par rapport au Fe compris entre 0,1 et 5 pour le B, entre 0,05 et 2,5 pour le Mn, entre 0,01 et 1 pour le Zn, entre 0,005 et 0,25 pour le Cu et pour le Mo et entre 0,001 et 0,1 pour le Co.

De telles teneurs en micronutriments assurent les apports en micronutriments adéquats pour quantité d'applications, c'est-à-dire selon les besoins réels des organismes. Ces teneurs peuvent toutefois être modifiées en fonction de l'application (animale, humaine ou végétale), comme en fonction du stade de développement du végétal dans le domaine d'application végétal, qui, selon sa morphologie et sa phase de croissance requiert des proportions variables entre des différents macro- et micronutriments.

De préférence, selon la présente invention, ledit au moins un polyphosphate est choisi dans le groupe constitué des polyphosphates alcalins sodiques et potassiques, qui en plus d'agir comme agents complexant pour le fer, contribuent à l'apport en micronutriments essentiels et indispensables à l'homme, l'animal et les végétaux pour lesquels ils favorisent une croissance et un métabolisme corrects.

De préférence, selon la présente invention, ledit au moins un polyphosphate est choisi dans le groupe constitué des pyrophosphates et des tripolyphosphates, comme par exemple le tétrapotassium pyrophosphate (TKPP), le potassium tripolyphosphate (KTPP), le sodium tripolyphosphate (STPP), le pyrophosphate de sodium acide (SAPP) et le tétrasodium pyrophosphate (TSPP).

Dans le cadre de la présente invention, il a été montré que ces polyphosphates sont particulièrement indiqués puisque, d'une part en agissant comme des agents complexants, ils permettent de maintenir le fer sous forme d'ions dissous assimilables par les organismes, mais d'autre part parce qu'ils sont bien tolérés ou réputés acceptés comme additifs nutritifs alimentaires ou au niveau des cultures. Par ailleurs, comme mentionné plus haut, ces polyphosphates contribuent aux apports en phosphore, en sodium et en potassium, trois éléments requis pour un développement correct des organismes.

Avantageusement, dans la solution nutritive selon la présente invention, le rapport molaire M/Pₜₒₜₐₗ est compris entre 1 et 2, de préférence entre 1,3 et 2 et où M représente le nombre de moles total en métal alcalin sodique et potassique.

Avantageusement, la solution nutritive selon la présente invention comprend en outre du phosphore sous forme d'orthophosphate selon un rapport molaire Pₒᵣₜₕₒ/Pₜₒₜₐₗ compris entre 0 et 0,95, où Pₒᵣₜₕₒ représente le nombre de moles de phosphore sous forme d'orthophosphate et où Pₜₒₜₐₗ représente le nombre de mole de phosphore total, ce rapport molaire étant de préférence compris entre 0 et 0,3. En effet, la source de phosphate selon la présente invention permet également dans une forme de réalisation avantageuse d'apporter du phosphore (P) sous forme de phosphates assimilables utiles aux organismes.

Selon la présente invention, de manière tout à fait avantageuse, la solution nutritive inorganique présente une turbidité de solution inférieure à 50 NTU, de préférence inférieure à 20 NTU et un pourcentage d'insoluble inférieur à 0,2% en poids par rapport au poids de la composition, de préférence inférieur à 0,1% en poids par rapport au poids de la composition.

De plus, de manière tout aussi avantageuse, la solution nutritive selon la présente invention présente une durée de conservation supérieure à 6 mois, de préférence supérieure à 12 mois à 25°C.

Dans une forme de réalisation particulièrement préférentielle, et de manière particulièrement inattendue, la solution nutritive selon la présente invention présente un pH compris dans la plage allant de 7,0 à 10,8.

En effet, cette plage de pH est tout à fait surprenante pour la solution nutritive selon l'invention, dès lors que comme mentionné précédemment, l'homme de métier ne l'envisagerait pas pour deux raisons majeures. La première raison réside dans le fait que, comme mentionné précédemment, cette plage de pH accélère la vitesse de dégagement de l'ammoniac gazeux, lorsqu'il est présent, et ce même à des teneurs peu élevées comme selon la présente invention. Ce dégagement d'ammoniac accéléré conduit à un risque de toxicité et de danger considéré comme inacceptable.

La deuxième raison, bien connue par l'homme de métier, réside dans le fait que la précipitation et la complexation du fer (II ou III) par les ions OH- concurrence de plus en plus sa complexation par les anions polyphosphates au fur et à mesure que l'on augmente le pH de la solution. Il est donc apparu de manière tout à fait surprenante que la solution nutritive inorganique selon la présente invention puisse être obtenue et reste stable dans la plage de pH entre 7 et 10,8, ce qui constitue un avantage technologique complémentaire en ce que typiquement, à des pH acides, l'hydrolyse des polyphosphates en orthophosphate est accélérée. Le fait de pouvoir maintenir une solution nutritive à un pH entre 7 et 10,8 permet donc de réduire l'hydrolyse des polyphosphates et donc d'augmenter la durée de vie de la solution nutritive.

En effet, l'hydrolyse des polyphosphates en phosphates inférieurs, jusqu'à aboutir à la formation d'orthophosphates aurait pour résultat de réduire progressivement la teneur en polyphosphate et donc le rapport molaire P_{poly}/Fe de la solution nutritive, ce qui réduirait incontestablement la biodisponibilité du fer dans le milieu nutritif final où la complexation d'autres ions comme le calcium et le magnésium par le polyphosphates entre en compétition avec celle du fer. De plus, cette hydrolyse peut également entrainer un phénomène de post-précipitation dans la solution nutritive elle-même par réduction de ce rapport molaire P_{poly}/Fe.

De manière avantageuse, la composition nutritive inorganique selon l'invention présente une valeur de transmittance, mesurée par spectrophotométrie d'absorption UV-visible à une longueur d'onde de 254 nm pour un trajet optique de 10 mm, d'au moins 45 %, de préférence d'au moins 55 %, de manière plus préférentielle d'au moins 65 %, plus préférentiellement d'au moins 75 %.

En horticulture sous serre, il est avantageux de recycler les eaux de drainage dans le système de fertirrigation pour que les sels résiduels ne se retrouvent pas dans l'environnement. La propagation de micro-organismes peut conduire à l'apparition de bactéries, de virus, de moisissures ou de nématodes. Ces organismes peuvent être nocifs pour les plantes. La désinfection des eaux drainées devient alors une opération avantageuse afin d'éviter une propagation desdits micro-organismes. Actuellement, le recyclage des eaux de drainage est réalisé en exposant la solution récupérée à des rayonnements ultraviolets (UV-C), préférentiellement à une longueur d'onde de 254 nm de façon à suffisamment détruire le matériel génétique desdits micro-organismes.

Par conséquent, une solution de drainage qui est suffisamment perméable au rayonnement UV-C est avantageuse en ce qu'elle lui permet d'atteindre les micro-organismes sans être absorbé par les solutés de ladite solution. Or les solutions contenant la composition selon l'invention absorbent moins le rayonnement UV-C que des solutions contenant des chélates organiques.

Par ailleurs, la composition selon l'invention résiste d'avantage aux rayonnements UV-C et ce par rapport à une composition nutritive comprenant un chélatant organique qui subit une décomposition photochimique irréversible. Ceci se traduit par une meilleure stabilité de la composition selon l'invention lors du traitement UV-C en évitant de manière particulièrement avantageuse toute perte de fer par précipitation.
D'autres formes de réalisation de la composition suivant l'invention sont indiquées dans les revendications annexées.

L'invention se rapporte aussi à une utilisation d'une composition nutritive inorganique selon l'invention pour la fabrication d'une solution diluée dans laquelle les macronutriments et les micronutriments sont biodisponibles.

Avantageusement, la composition nutritive selon l'invention, sous forme de solution est également utilisée comme composition fertilisante pour l'horticulture, la fertirrigation, l'hydroponie et analogues.

Dans une variante selon l'invention, la solution nutritive est également utilisée comme complément alimentaire ou additif alimentaire pour des aliments et/ou des boissons enrichis en fer biodisponible. De façon avantageuse, la composition nutritive inorganique selon l'invention peut aussi être utilisée dans la nutrition animale ou humaine.

D'autres formes de réalisation de l'utilisation suivant l'invention sont indiquées dans les revendications annexées.

D'autres caractéristiques, détails et avantages de l'invention ressortiront des exemples donnés ci-après, à titre non limitatif et en faisant référence aux exemples annexés.

Selon la présente invention, une solution nutritive inorganique à base de fer est obtenue par mise en contact d'une phase aqueuse, d'une source de fer et d'une source de phosphate comprenant au moins un polyphosphate, comme décrit dans les exemples.

Comme indiqué précédemment, la source de phosphate ajoutée à la phase aqueuse est dans le groupe constitué polyphosphate alcalin sodiques et potassiques et de préférence dans le groupe des pyrophosphates et des tripolyphosphates, comme par exemple le tétrapotassium pyrophosphate (TKPP), le potassium tripolyphosphate (KTPP), le sodium tripolyphosphate (STPP), le pyrophosphate de sodium acide (SAPP) et le tétrasodium pyrophosphate (TSPP), ceci n'excluant pas la présence de chaines polyphosphates de longueur supérieure, bien que dans le cadre de la présente invention, il a été montré que les polyphosphates à 2 et 3 atomes de P sont particulièrement indiqués pour assurer la biodisponibilité du fer dans de nombreuses applications du vivant.

Ladite au moins une source de fer est choisie dans le groupe constitué de Fe₂(SO₄)₃.xH₂O où x représente un coefficient molaire compris entre 0 et 9, MFe(SO₄)₂.12H₂O où M représente Na ou K, Fe(NO₃)₃.xH₂O où x représente un coefficient molaire compris entre 0 et 9, FeCl₃. xH₂O où x représente un coefficient molaire compris entre 0 et 6, Fe₄(P₂O₇)₃, FePO₄.xH₂O où x représente un coefficient molaire compris entre 0 et 4, FeSO₄.xH₂O où x représente un coefficient molaire compris entre 0 et 7, FeCl₂.xH₂O où x représente un coefficient molaire compris entre 0 et 4, FeO.xH₂O où x représente un coefficient molaire compris entre 0 et 1, Fe(NH₄)PO₄.H₂O, oxysulfate de fer, Fe2O3.xH2O où x représente un coefficient molaire compris entre 0 et 3" et leurs mélanges.

Lorsqu'une source additionnelle de micronutriment est ajoutée en tant que source de B, Mn, Zn, Cu, Mo, Co, elle est choisie dans le groupe constitué de Zn(NH₃)₄SO₄, ZnCl₂, Zn(NO₃)₂.xH₂O où x représente un coefficient molaire compris entre 0 et 3, oxysulfate de zinc dont la fraction massique totale en zinc est comprise dans la plage allant de 20 à 60% par rapport au poids du composé, ZnSO₄.xH₂O où x représente un coefficient molaire compris entre 0 et 7, Cu(OH)₂, CuCl, CuCl₂, 3Cu(OH)₂.CuCl₂, CuSO₄.xH₂O où x représente un coefficient molaire compris entre 0 et 5, Cu(NH₄)PO₄.H₂O, MnCl₂.XH₂O où x représente un coefficient molaire compris entre 0 et 4, oxysulfate de manganèse dont la fraction massique totale en manganèse est comprise dans la plage allant de 30 à 50% par rapport au poids du composé, MnSO₄.xH₂O où x représente un coefficient molaire compris entre 0 et 5, (NH₄)₆Mo₇O₂₄.4H₂O, H₂MoO₄.H₂O, Na₂MoO₄.2H₂O, H₃BO₃, Na₂B₁₀O₁₆.10H₂O, Na₂B₄O₇, Na₂B₄O7.5H₂O, Na₂B₄O₇.10H₂O, Na₂B₈O₁₃.4H₂O, CoCl₂.6H₂O, Co(NO₃)₂.6H₂O et leurs mélanges.

A la lecture des exemples ci-dessous, les avantages de l'invention seront mis en évidence en fonction des différentes compositions nutritives fabriquées sous forme de solution, tant au niveau de la solubilité du fer que de la stabilité de ces solutions nutritives.

### EXEMPLES

### EXEMPLE 1.-

On commence par dissoudre 100 g de TKPP (42,7% de P₂O₅ en poids, 57,0% de K₂O en poids) dans 99,5 g d'eau. Après dissolution complète du polyphosphate, on ajoute 15,5 g de sulfate ferrique (21,9% en poids de Fe) en poudre. La dissolution du fer s'effectue sous agitation à température ambiante. 17,7 g d'une solution de KOH 23,8% en poids sont ajoutés 1 jour après la source de fer et la solution est enfin filtrée après 1 jour d'agitation supplémentaire. La solution atteint alors un pH de 9,6 avec une concentration en fer de 1,48% en poids, une concentration en P₂O₅ de 18,8% en poids et un rapport molaire P_{poly}/Fe égal à 10,0. Elle est toujours limpide après 4 mois de conservation à 5°C pendant lesquels le pH mesuré à 20°C est monté jusqu'à 10,0.

### EXEMPLE COMPARATIF 1.-

L'essai est identique à l'exemple 1 mis à part la masse de KOH 23,8% qui s'élève maintenant à 23,0 g et le temps d'agitation avant l'addition de KOH qui n'est plus que de 30 minutes. La solution fraîchement filtrée est ainsi à pH 11,6. Elle présente un précipité important après 4 mois de conservation à 5°C, ce qui lui confère une turbidité de 220 NTU. Le pH à 20°C est alors de 11,0.

### EXEMPLE 2.-

On commence par dissoudre 100 g de TKPP (42,7% de P₂O₅ en poids, 57,0% de K₂O en poids) dans 99,4 g d'eau. Après dissolution complète du polyphosphate, on ajoute d'abord 31,3 g d'une solution d'H₃PO₄ 27,6% en poids et ensuite 15,4 g de sulfate ferrique (21,9% en poids de Fe) en poudre. La solution est filtrée après 1 jour d'agitation à température ambiante. La solution atteint alors un pH de 7,1 avec une concentration en fer de 1,30 % en poids, une concentration en P₂O₅ₜₒₜₐₗ de 19,4% et un rapport molaire Ppoly/Fe de 10,0. Elle est toujours limpide après 4 mois de conservation à 5°C.

### EXEMPLE 3.-

L'essai est identique à celui de l'exemple 2 mis à part la masse de H₃PO₄ 27,6% qui est maintenant de 115,3 g. Le pH après filtration est alors de 5,1. La concentration finale en fer est de 1,06% en poids. La solution est également toujours limpide après 4 mois de conservation à 5°C.

### EXEMPLE 4.-

On commence par dissoudre 51,5 g de KTPP (46,4% de P₂O₅ en poids, 53,3% de K₂O en poids) dans 66,0g d'eau. Après dissolution complète du polyphosphate, on ajoute d'abord 5,96 g de FeCl₂.4H₂O (28,0% en poids de Fe) en poudre et ensuite 1,87 g de solution KOH 23,8% en poids. La solution, qui devient limpide après 10 minutes d'agitation à température ambiante, n'est pas filtrée. Son pH est égal à 9,0 avec un rapport molaire P_{poly}/Fe de 10,0 et des concentrations en poids de 1,35% pour le fer, 19,6% pour le P₂O_{5 total} et 2,3% pour le P₂O₅ₒᵣₜₕₒ. La solution est toujours limpide après 4 mois de conservation à 5°C.

### EXEMPLE 5.-

On commence par dissoudre 50,0 g de KTPP (46,4% de P₂O₅ en poids, 53,3% de K₂O en poids) dans 66,0 g d'eau. Après dissolution complète du polyphosphate, on ajoute d'abord 11,8 g de solution H₃PO₄ 27,6% en poids et ensuite 7,61 g de sulfate ferrique (21,9% en poids de Fe) en poudre. La solution est filtrée après 1 jour d'agitation à température ambiante. La solution atteint alors un pH de 6,7 avec une concentration en fer de 1,34 % en poids, une concentration en P₂O₅ₜₒₜₐₗ de 19,8% et un rapport molaire P_{poly}/Fe de 10,0. Elle est toujours limpide après 4 mois de conservation à 5°C.

### EXEMPLE 6.-

On commence par dissoudre 100,0 g de KTPP (46,4% de P₂O₅ en poids, 53,3% de K₂O en poids) dans 116,8 g d'eau. Après dissolution complète du polyphosphate, on ajoute d'abord 69,1 g de solution H₃PO₄ 27,6% en poids et ensuite 15,3 g de sulfate ferrique (21,9% en poids de Fe) en poudre. La solution est filtrée après 1 jour d'agitation à température ambiante. La solution atteint alors un pH de 5,1 avec une concentration en fer de 1,06 % en poids, une concentration en P₂O₅ₜₒₜₐₗ de 19,9% et un rapport molaire P_{poly}/Fe de 10,0. Elle est toujours limpide après 4 mois de conservation à 5°C.

### EXEMPLE 7.-

Les solutions des six exemples précédents et de l'exemple comparatif ont été soumises à des tests de vieillissement accélérés à 60°C pour évaluer leurs vitesses d'hydrolyse relatives. La manière dont la température accélère la réaction d'hydrolyse est bien décrite dans la littérature (Phosphorus and its Compounds, J. Van Wazer, Interscience Publishers (1958), Vol.1, p.452). L'effet du pH est en fait similaire quelle que soit la température de vieillissement.

Les résultats sont présentés au tableau 1. Les exemples EC1, 3 et 6 qui y sont présentés ne sont pas dans le cadre de la présente invention. Le taux de conversion TC est défini comme étant le rapport molaire P_{poly}/Pₜₒₜₐₗ où P_{poly} représente le nombre de mole de phosphore sous forme de polyphosphate et Pₜₒₜₐₗ représente le nombre de moles de phosphore total dans la solution nutritive. La teneur totale en phosphore est aisément dosée dans la solution nutritive selon la présente invention et permet le calcul du nombre de mole total de phosphore dans la solution nutritive. Le nombre de moles d'orthophosphate peut également être aisément dosé, ce qui permet par différence de calculer le nombre de moles de phosphore sous forme de polyphosphate P_{poly} = Pₜₒₜₐₗ - Pₒᵣₜₕₒ.

**TABLEAU 1.-**

| **Exemple** | **1** | **EC1** | **2** | **3** | **4** | **5** | **6** |
|---|---|---|---|---|---|---|---|
| Type polyphosphate | TKPP | TKPP | TKPP | TKPP | KTPP | KTPP | KTPP |
| Avant vieillissement: | | | | | | | |
| pH | 10,0 | 11,0 | 7,3 | 5,2 | 9,0 | 6,8 | 5,1 |
| Turbidité (NTU) | 1,7 | 220 | 0,6 | 0,5 | 1,3 | 1,4 | 0,5 |
| TC (%) | >99,5 | >99,5 | 81,3 | 63,6 | 84,0 | 73,2 | 57,8 |
| Après 20 jours de vieillissement à 60°C: | | | | | | | |
| pH | 9,5 | 9,5 | 6,9 | 5,3 | 7,6 | 6,4 | 5,2 |
| Turbidité (NTU) | 1,7 | 249 | 0,6 | >1000¹ | 1,4 | 1,5 | >1000¹ |
| TC (%) | 97,1 | 97,6 | 41,7 | 8,4 | 50,8 | 26,5 | 17,2 |
| RM (Ppoly / Fe) | 9,7 | 9,8 | 5,1 | 1,3 | 6,4 | 3,6 | 3,0 |

| | | | | | | | |
|---|---|---|---|---|---|---|---|
| ¹ = la solution s'est gélifiée | | | | | | | |

### EXEMPLE 8.-

Des essais de culture ont été menés sur des plants de concombre de la variété « Proloog » dans une serre de 140 m² équipée de systèmes de chauffage, de contrôle climatique et de culture dont disposent habituellement les exploitations commerciales. Le système de culture était composé de gouttières en acier suspendues à 50 cm du sol avec une distance de 80 cm entre les rangées. Les gouttières comprenaient des matelas de laine de roche de 15 cm x 7,5 cm, et étaient enveloppées dans un film en polyéthylène avec des fentes de drainage dans le fond. Dans le présent exemple, les eaux de drainage n'ont pas été recyclées dans le circuit de fertirrigation.

Les plants de concombre de la variété « Proloog », ont été fournis sur des blocs de 10 cm en laine de roche. Ces blocs ont été plantés sur les matelas de laine de roche dès que les plants atteignaient 30 cm de hauteur. La densité d'implantation était de 1,4 plants/m².

Le tableau 2 illustre la composition type de la solution nutritive utilisée dans cet exemple pour atteindre les concentrations optimales au niveau du milieu racinaire. Ce milieu racinaire se caractérise notamment par une très faible teneur en ions ammonium (NH₄⁺). Le dosage en ions ammonium dans l'eau d'irrigation est un point très délicat pour l'horticulteur. Il se sert notamment de ce paramètre pour réguler le pH du milieu racinaire.

**TABLEAU 2.-**

| | Solution nutritive | Valeurs cibles pour le milieu racinaire |
|---|---|---|
| Conductivité électrique (mS/cm) | 2,5-3,5 | 2,70 |
| pH | 5,0 - 5,6 | 5-6 |
| NH₄ (mM) | 1,7 | 0,1 |
| K (mM) | 10,8 | 8 |
| Ca (mM) | 5,4 | 6,5 |
| Mg (mM) | 1,9 | 3,0 |
| NO₃ (mM) | 21,6 | 18 |
| SO₄ (mM) | 1,9 | 3,5 |
| P (mM) | 1,7 | 1,25 |
| Fe (M) | 15 | 25 |
| Mn (µM) | 10 | 7,0 |
| Zn (µM) | 5,0 | 7,0 |
| B (µM) | 35 | 50 |
| Cu (µM) | 0,8 | 1,5 |
| Mo (µM) | 0,5 | 1,0 |

Cet exemple a permis de comparer une source de fer selon l'invention à un chélate de fer organique standard, ces deux essais différents occupant chacun la moitié de la superficie de la serre répartie de manière aléatoire.

La composition de fer selon l'invention était celle de l'exemple 5. Les quantités de phosphore et de potassium apportées par cette solution ont été retirées de la solution mère standard.

Les deux solutions nutritives diluées ont été préparées dans des cuves de 500 litres où avait également lieu le dosage du fer.

Ces solutions étaient maintenues de manière continue dans un domaine de pH situé entre 5,0 et 5,6. Les corrections nécessaires ont été réalisées par addition de HNO₃ ou de K₂CO₃. La conductivité électrique était modulée dans une plage allant de 2,5 à 3,5 mS/cm suivant la vitesse de croissance des plantes et les conditions climatiques prévues.

Une analyse statistique a été réalisée selon la méthode Anova pour comparer les rendements de production obtenus avec les deux sources de fer différentes. Les rendements de production ont été exprimés en kg/m², en nombre de fruits /m² et en grammes/concombre. Cette analyse a révélé que la biodisponibilité du fer présent dans la composition nutritive selon l'invention est équivalente à celle du chélate de fer organique standard. Cette observation a également été confirmée par des évaluations du degré de chlorose ferrique basées sur la couleur des feuilles.

L'effet complexant du polyphosphate sur le fer permet de fournir une composition nutritive qui présente des performances au moins équivalentes aux compositions nutritives à base de fer chélaté par un élément organique.

### EXEMPLE 9.-

La composition nutritive décrite à l'exemple 5 et une solution de chélate de fer organique couramment utilisé en fertirrigation sur substrat ont été diluées pour atteindre une concentration en fer de 50 µM et ajustée à un pH de 5,8.

Les compositions ainsi diluées et ajustées en pH ont été analysées par spectrophotométrie d'absorption UV-visible (appareil de marque : Shimazu et de type : UV-2600 IVDD) à une longueur d'onde de 254 nm pour un trajet optique de 10 mm.

La valeur de la transmittance pour la composition nutritive diluée selon l'invention est de 72% tandis que la valeur est de 38 % pour la solution réalisée avec le chélate organique de référence.

On constate donc que la composition selon l'invention offre une perméabilité au rayonnement UV-C qui est avantageuse par rapport à celle observée avec la solution contenant le chélate organique. Cela pourrait se traduire par des économies significatives en termes d'investissements (taille du stérilisateur UV) et de consommation énergétique (puissance de la lampe UV).

### EXEMPLE 10.-

Les deux solutions nutritives complètes de l'exemple 8 ont été soumises à des traitements UV-C identiques à 254 nm dans un système de laboratoire avec une lampe UV de 5 W. Les deux solutions de départ, ajustées à pH 5,8, contenaient du fer uniquement sous forme soluble. Les taux de fer en solution après traitement UV-C ont été déterminés en filtrant chaque solution à 0,22 µm, en mesurant ensuite la concentration en fer du filtrat par absorption atomique et en divisant enfin le résultat par la concentration totale en fer.

Après un temps d'exposition aux UV-C donné, le taux de fer en solution est de 83% pour la solution nutritive réalisée avec la composition nutritive selon l'invention et de 31% pour la solution réalisée avec le chélate de fer standard.

La composition nutritive selon l'invention résiste donc mieux au rayonnement UV-C que le chélate de fer standard dont le chélatant organique subit une dégradation photochimique irréversible.

## Revendications

1. Composition nutritive inorganique comprenant au moins une phase aqueuse, au moins un polyphosphate et au moins une source de fer en tant que micronutriment, ladite composition nutritive présentant un rapport molaire P_{poly}/Fe compris entre 5 et 50 où P_{poly} représente un nombre de moles total de phosphore sous forme de polyphosphate et où Fe représente un nombre de moles total de fer, **caractérisée en ce que** ladite composition nutritive inorganique comprenant au moins une phase aqueuse est sous forme de solution aqueuse dans laquelle le fer de ladite source de fer est complexé audit au moins un polyphosphate et **en ce qu'**elle présente en outre un rapport molaire N/Pₜₒₜₐₗ inférieur ou égal à 0,2, où N représente le nombre de moles d'ammonium et où Pₜₒₜₐₗ représente le nombre de moles de phosphore total.

2. Composition nutritive inorganique selon la revendication 1, dans laquelle ledit rapport molaire P_{poly}/Fe est compris entre 8 et 32.

3. Composition nutritive inorganique selon la revendication 1 ou la revendication 2, dans laquelle ledit rapport molaire N/Pₜₒₜₐₗ est inférieur ou égal à 0,15, de préférence inférieur ou égal à 0,10, de manière préférentielle inférieur ou égal à 0,05 et plus particulièrement proche de 0, voire nul.

4. Composition nutritive inorganique selon l'une quelconque des revendications 1 à 3, présentant une teneur en fer comprise entre 0,02 et 3 % en poids de fer par rapport au poids total de ladite composition nutritive.

5. Composition nutritive inorganique selon l'une quelconque des revendications 1 à 4, comprenant en outre une source additionnelle de micronutriment choisie dans le groupe constitué des sources de B, Mn, Zn, Cu, Mo, Co et leurs mélanges, et dans laquelle ladite au moins une source additionnelle de micronutriment est présente dans un ratio atomique par rapport au Fe compris entre 0,1 et 5 pour le B, entre 0,05 et 2,5 pour le Mn, entre 0,01 et 1 pour le Zn, entre 0,005 et 0,25 pour le Cu et pour le Mo et entre 0,001 et 0,1 pour le Co.

6. Composition nutritive inorganique selon l'une quelconque des revendications précédentes, dans laquelle ledit moins un polyphosphate est choisi dans le groupe constitué des polyphosphates alcalins sodiques et potassiques.

7. Composition nutritive inorganique selon l'une quelconque des revendications 1 à 6, dans laquelle ledit au moins un polyphosphate est choisi dans le groupe constitué des pyrophosphates et des tripolyphosphates, comme par exemple le tétrapotassium pyrophosphate (TKPP), le potassium tripolyphosphate (KTPP), le sodium tripolyphosphate (STPP), le pyrophosphate de sodium acide (SAPP) et le tétrasodium pyrophosphate (TSPP).

8. Composition nutritive inorganique selon les revendications 6 ou 7, présentant rapport molaire M/Pₜₒₜₐₗ entre 1 et 2, de préférence entre 1,3 et 2 et où M représente le nombre de mole total en métal alcalin sodique et potassique.

9. Composition nutritive inorganique selon l'une quelconque des revendications précédentes , comprenant en outre du phosphore sous forme d'orthophosphate selon un rapport molaire Pₒᵣₜₕₒ/Pₜₒₜₐₗ compris entre 0 et 0,95, où Pₒᵣₜₕₒ représente le nombre de moles de phosphore sous forme d'orthophosphate et où Pₜₒₜₐₗ représente le nombre de mole de phosphore total, ce rapport molaire étant de préférence compris entre 0 et 0,3.

10. Composition nutritive inorganique selon l'une quelconque des revendications 1 à 9, présentant une turbidité de solution inférieure à 50 NTU, de préférence inférieure à 20 NTU, et un pourcentage d'insoluble inférieur à 0,2% en poids par rapport au poids de la composition, de préférence inférieur à 0,1% en poids par rapport au poids de la composition.

11. Composition nutritive inorganique selon l'une quelconque des revendications précédentes, présentant une durée de conservation supérieure à 6 mois, de préférence supérieure à 12 mois à 25°C.

12. Composition nutritive inorganique selon l'une quelconque des revendications précédentes, présentant un pH compris dans la plage allant de 7,0 à 10,8.

13. Composition nutritive inorganique selon l'une quelconque des revendications précédentes, présentant une valeur de transmittance, mesurée par spectrophotométrie d'absorption UV-visible à une longueur d'onde de 254 nm pour un trajet optique de 10 mm, d'au moins 45 %, de préférence d'au moins 55 %, de manière plus préférentielle d'au moins 65 %, plus préférentiellement d'au moins 75 %.

14. Utilisation d'une composition nutritive inorganique selon l'une quelconque des revendications 1 à 13, pour la fabrication d'une solution diluée dans laquelle les macronutriments et les micronutriments sont biodisponibles.

15. Utilisation d'une composition nutritive inorganique selon la revendication 14, comme composition fertilisante pour l'horticulture, la fertirrigation, l'hydroponie et analogues.

## Patentansprüche

1. Anorganische Nahrungszubereitung, welche zumindest eine wässrige Phase, zumindest ein Polyphosphat und zumindest eine Eisenquelle als Mikronährstoff enthält, wobei die Nahrungszubereitung ein Stoffmengenverhältnis P_{poly}/Fe von zwischen 5 und 50 aufweist, wobei P_{poly} eine Gesamtmolzahl von Phosphor in Form von Polyphosphat darstellt und wobei Fe eine Gesamtmolzahl von Eisen darstellt, **dadurch gekennzeichnet, dass** die erwähnte anorganische Nahrungszubereitung, welche zumindest eine wässrige Phase enthält, in Form einer wässrigen Lösung vorliegt, in der das Eisen der erwähnten Eisenquelle an das erwähnte zumindest eine Polyphosphat komplexiert ist, und dadurch, dass sie ferner ein Stoffmengenverhältnis N/P_{gesamt} von weniger als oder gleich 0,2 aufweist, wobei N die Molzahl von Ammonium darstellt, und wobei P_{gesamt} die Molzahl des Gesamtphosphors darstellt.

2. Anorganische Nahrungszubereitung nach Anspruch 1, in der das erwähnte Stoffmengenverhältnis P_{poly}/Fe zwischen 8 und 32 liegt.

3. Anorganische Nahrungszubereitung nach Anspruch 1 oder 2, in der das erwähnte Stoffmengenverhältnis N/P_{gesamt} niedriger als oder gleich 0,15 ist, bevorzugt niedriger als oder gleich 0,10, vorzugsweise niedriger als oder gleich 0,05 und genauer gesagt nahe 0, bzw. null.

4. Anorganische Nahrungszubereitung nach irgendeinem der Ansprüche 1 bis 3, welche einen Eisengehalt von zwischen 0,02 und 3 Gew.-% Eisen im Verhältnis zum Gesamtgewicht der erwähnten Nahrungszubereitung aufweist.

5. Anorganische Nahrungszubereitung nach irgendeinem der Ansprüche 1 bis 4, welche ferner eine zusätzliche Quelle von Mikronährstoff umfasst, ausgewählt aus der Gruppe bestehend aus den Quellen von B, Mn, Zn, Cu, Mo, Co und deren Mischungen, und in der die erwähnte zumindest eine zusätzliche Quelle von Mikronährstoff in einem Atomverhältnis zum Fe von zwischen 0,1 und 5 für B vorliegt, zwischen 0,05 und 2,5 für Mn, zwischen 0,01 und 1 für Zn, zwischen 0,005 und 0,25 für Cu und für Mo und zwischen 0,001 und 0,1 für Co.

6. Anorganische Nahrungszubereitung nach irgendeinem der vorigen Ansprüche, in der das zumindest eine Polyphosphat aus der Gruppe bestehend aus den alkalischen Natrium- und Kaliumpolyphosphaten ausgewählt ist.

7. Anorganische Nahrungszubereitung nach irgendeinem der Ansprüche 1 bis 6, in der das zumindest eine Polyphosphat aus der Gruppe bestehend aus Pyrophosphaten und Tripolyphosphaten ausgewählt ist, wie zum Beispiel Tetrakaliumpyrophosphat (TKPP), Kaliumtripolyphosphat (KTPP), Natriumtripolyphosphat (STPP), saures Natriumpyrophosphat (SAPP) und Tetranatriumpyrophosphat (TSPP).

8. Anorganische Nahrungszubereitung nach den Ansprüchen 6 oder 7, welche ein Stoffmengenverhältnis M/P_{gesamt} von zwischen 1 und 2 aufweist, bevorzugt zwischen 1,3 und 2, und wobei M die Gesamtmolzahl an Alkalimetall Natrium und Kalium darstellt.

9. Anorganische Nahrungszubereitung nach irgendeinem der vorigen Ansprüche, welche ferner Phosphor in Form von Orthophosphat in einem Stoffmengenverhältnis Pₒᵣₜₕₒ/P_{gesamt} von zwischen 0 und 0,95 umfasst, wobei Pₒᵣₜₕₒ die Molzahl von Phosphor in Form von Orthophosphat darstellt, und wobei P_{gesamt} die Molzahl von Gesamtphosphor darstellt, wobei das Stoffmengenverhältnis bevorzugt zwischen 0 und 0,3 liegt.

10. Anorganische Nahrungszubereitung nach irgendeinem der Ansprüche 1 bis 9, welche eine Trübung der Lösung von weniger als 50 NTU aufweist, bevorzugt weniger als 20 NTU, und einen unlöslichen Anteil von weniger als 0,2 Gew.-% im Verhältnis zum Gewicht der Zubereitung, bevorzugt weniger als 0,1 Gew.-% im Verhältnis zum Gewicht der Zubereitung.

11. Anorganische Nahrungszubereitung nach irgendeinem der vorigen Ansprüche, welche bei 25 °C eine Haltbarkeitsdauer von mehr als 6 Monaten aufweist, bevorzugt mehr als 12 Monate.

12. Anorganische Nahrungszubereitung nach irgendeinem der vorigen Ansprüche, welche einen pH-Wert im Bereich von 7,0 bis 10,8 aufweist.

13. Anorganische Nahrungszubereitung nach irgendeinem der vorigen Ansprüche, welche einen Lichtdurchlässigkeitsgrad, gemessen mit UVsichtbarer Absorptions-Spektrophotometrie bei einer Wellenlänge von 254 nm für eine optische Weglänge von 10 mm, von mindestens 45 %, bevorzugt mindestens 55 %, noch besser mindestens 65 %, am besten mindestens 75 % aufweist.

14. Verwendung einer anorganischen Nahrungszubereitung nach irgendeinem der Ansprüche 1 bis 13, für die Herstellung einer verdünnten Lösung, in der die Makronährstoffe und die Mikronährstoffe biologisch verfügbar sind.

15. Verwendung einer anorganischen Nahrungszubereitung nach Anspruch 14, als Dünger für Gartenbau, Beregnungsdüngung, Hydrokultur und Ähnliches.

## Claims

1. An inorganic nutrient composition comprising at least one aqueous phase, at least one polyphosphate and at least one source of iron as micronutrient, the said nutrient composition having a P_{poly}/Fe molar ratio of between 5 and 50 where P_{poly} is a total number of moles of phosphorus in polyphosphate form and where Fe is a total number of moles of iron, **characterized in that** the said inorganic nutrient composition comprising at least one aqueous phase is in the form of an aqueous solution in which the iron of the said iron source is complexed to the said at least one polyphosphate, and **in that** it also has a molar ratio N/Pₜₒₜₐₗ of 0.2 or lower, where N is the number of moles of ammonium and where Pₜₒₜₐₗ is the number of moles of total phosphorus.

2. The inorganic nutrient composition according to claim 1 wherein the said molar ratio P_{poly}/Fe is between 8 and 32.

3. The inorganic nutrient composition according to claim 1 or claim 2 wherein the said molar ratio N/_{Ptotal} is 0.15 or lower, preferably 0.10 or lower, more preferably 0.05 or lower and further preferably close to 0, even zero.

4. The inorganic nutrient composition according to one of claims 1 to 3 having an iron content of between 0.02 and 3 % by weight relative to the total weight of the said nutrient composition.

5. The inorganic nutrient composition according to any of claims 1 to 4 further comprising an additional source of micronutrient selected from the group formed by sources of B, Mn, Zn, Cu, Mo, Co and the mixtures thereof, and wherein the said at least one additional source of micronutrient is contained in an atomic ratio relative to Fe of between 0.1 and 5 for B, between 0.05 and 2.5 for Mn, between 0.01 and 1 for Zn, between 0.005 and 0.25 for Cu and Mo, and between 0.001 and 0.1 for Co.

6. The inorganic nutrient composition according to any of the preceding claims wherein the said at least one polyphosphate is selected from the group formed by sodium and potassium alkaline polyphosphates.

7. The inorganic nutrient composition according to any of claims 1 to 6 wherein the said at least one polyphosphate is selected from the group formed by pyrophosphates and tripolyphosphates, such as tetrapotassium pyrophosphate (TKPP), potassium tripolyphosphate (KTPP), sodium tripolyphosphate (STPP), sodium acid pyrophosphate (SAPP) and tetrasodium pyrophosphate (TSPP).

8. The inorganic nutrient composition according to claims 6 or 7 having a molar ratio M/Pₜₒₜₐₗ between 1 and 2, preferably between 1.3 and 2 and where M is the total number of moles of sodium and potassium alkaline metal.

9. The inorganic nutrient composition according to any of the preceding claims further comprising phosphorus in orthophosphate form in a molar ratio Pₒᵣₜₕₒ/Pₜₒₜₐₗ of between 0 and 0.95, where Pₒᵣₜₕₒ is the number of phosphorus moles in orthophosphate form and where Pₜₒₜₐₗ is the number of moles of total phosphorus, this molar ratio preferably being between 0 and 0.3.

10. The inorganic nutrient composition according to any of claims 1 to 9 having solution turbidity lower than 50 NTU, preferably lower than 20 NTU, and a percentage of insolubles of less than 0.2 % by weight relative to the weight of the composition, preferably less than 0.1 % by weight relative to the weight of the composition.

11. The inorganic nutrient composition according to any of the preceding claims having a storage time of more than 6 months, preferably more than 12 months at 25°C.

12. The inorganic nutrient composition according to any of the preceding claims, having a pH in the range of 7.0 to 10.8.

13. The inorganic nutrient composition according to any of the preceding claims having a transmittance value, measured by UV-visible absorption spectrophotometry at a wavelength of 254 nm and optical path length of 10 mm, of at least 45 %, preferably at least 55 %, more preferably at least 65 %, further preferably at least 75 %.

14. The use of an inorganic nutrient composition according to any of claims 1 to 1 to produce a dilute solution in which the macronutrients and micronutrients are bioavailable.

15. The use of an inorganic nutrient composition according to claim 14 as fertilizing composition for horticulture, fertigation hydroponics and the like.
